# EUROPEAN PATENT APPLICATION

(11) **EP 3 358 198 A1**
(43) Date of publication of application: **08.08.2018**
(21) Application number: 16850824.0
(22) Date of filing: 15.07.2016
(51) Int. Cl.: F15B 11/024, F16K 3/26, F16K 11/07

(54) **SPOOL VALVE DEVICE**

(30) Priority: 28.09.2015 JP 2015189326
(71) Applicant: KYB Corporation, Tokyo 105-6111 (JP)
(72) Inventor: MATSUURA, Akio, Tokyo 105-6111 (JP)
(74) Representative: TBK
(86) International application number: PCT/JP2016/071016
(87) International publication number: WO 2017/056647

(57) **Abstract**

a spool valve device includes a valve body (B), an actuator port (34, 35), a spool (37), a supply passage (33), and a regeneration flow passage (45) formed in the spool (37). An inflow port (46) of the regeneration flow passage (45) always communicates with the actuator port (35), when the spool (37) is placed at a regeneration switching position where a predetermined moving amount from a neutral position is ensured, the outflow port (47) of the regeneration flow passage (45) communicates with the actuator port (34) through the supply passage (33), and when the spool (37) is placed at a position other than the regeneration switching position, the communication between the outflow port (47) and the actuator port (34) is blocked.

## Description

### TECHNICAL FIELD

The invention relates to a spool valve device for switching a spool to regenerate a return fluid from an actuator.

### BACKGROUND ART

JP2001-304202A discloses a spool valve device including a regeneration function of guiding a return fluid of a fluid chamber on one side of a cylinder to a fluid chamber on the other side.

This type of spool valve device has a valve body, and a pump passage, a supply passage, a pair of actuator ports, and a tank passage are provided in the valve body. A spool is slidably assembled into the valve body. When the spool is switched in the predetermined direction, a pressure fluid guided to the pump passage flows to the supply passage and is supplied to an actuator via the actuator port on one side. At this time, the return fluid discharged from the actuator to the actuator port on the other side flows out to the tank passage via a first annular groove formed in the valve body and an annular recessed portion formed in the spool.

A regeneration flow passage is formed in the spool in the axial direction of the spool. An inflow port is formed in one end of the regeneration flow passage, and an outflow port is formed in the other end of the regeneration flow passage. When the spool is placed at a neutral position, the inflow port is maintained at a position substantially adjacent to the supply passage on the inner side of the first annular groove of the valve body. The outflow port always communicates with the supply passage through a second annular groove formed in the valve body.

When the spool is switching in the predetermined direction, the inflow port of the regeneration flow passage opens in the first annular groove of the valve body in accordance with a switching amount of the spool. The return fluid discharged from the actuator to the actuator port on the other side not only flows to the tank passage from the annular recessed portion of the spool but also flows to the regeneration flow passage from the inflow port. The return fluid flowing into the regeneration flow passage joins the supply passage via the second annular groove of the valve body, and is regenerated on the side of the actuator port on one side.

### SUMMARY OF INVENTION

With the spool valve device described above, there is a problem that regeneration timing upon switching the spool in the predetermined direction is not easily advanced. The reason thereof is as follows.

In order to advance the regeneration timing, the inflow port of the regeneration passage has to open in the first annular groove of the valve body as quickly as possible when the spool is switched in the predetermined direction. For this, a distance from the inflow port to the first annular groove when the spool is placed at the neutral position has to be shortened. However, when this distance is too short, the inflow port and the annular recessed portion of the spool overlap with each other. Thus, shortening of this distance is limited. At the end, with the spool valve device described above, there is a problem that advancement of the regeneration timing is limited.

An object of the present invention is to provide a spool valve device capable of easily advancing regeneration timing.

According to one aspect of the present invention, a spool valve device includes a valve body; an actuator port on one side and an actuator port on the other side formed in the valve body; a spool slidably inserted into the valve body; a supply passage configured to provide communication between a pump and the actuator port on one side or the actuator port on the other side in accordance with a switching position of the spool; and a regeneration flow passage formed in the spool in the axial direction of the spool. An inflow port formed in one end of the regeneration flow passage always communicates with the actuator port on one side, an outflow port formed in the other end of the regeneration flow passage communicates with the actuator port on the other side or the communication between the outflow port and the actuator port on the other side is blocked in accordance with a moving position of the spool, when the spool is placed at a regeneration switching position where a predetermined moving amount from a neutral position is ensured, the outflow port communicates with the actuator port on the other side through the supply passage, and when the spool is placed at a position other than the regeneration switching position, the communication between the outflow port and the actuator port on the other side is blocked.

### BRIEF DESCRIPTION OF DRAWINGS

Fig. 1 is a sectional view showing an embodiment of the present invention; and
Fig. 2 is a sectional view of a spool valve device according to a comparative example.

### DESCRIPTION OF EMBODIMENTS

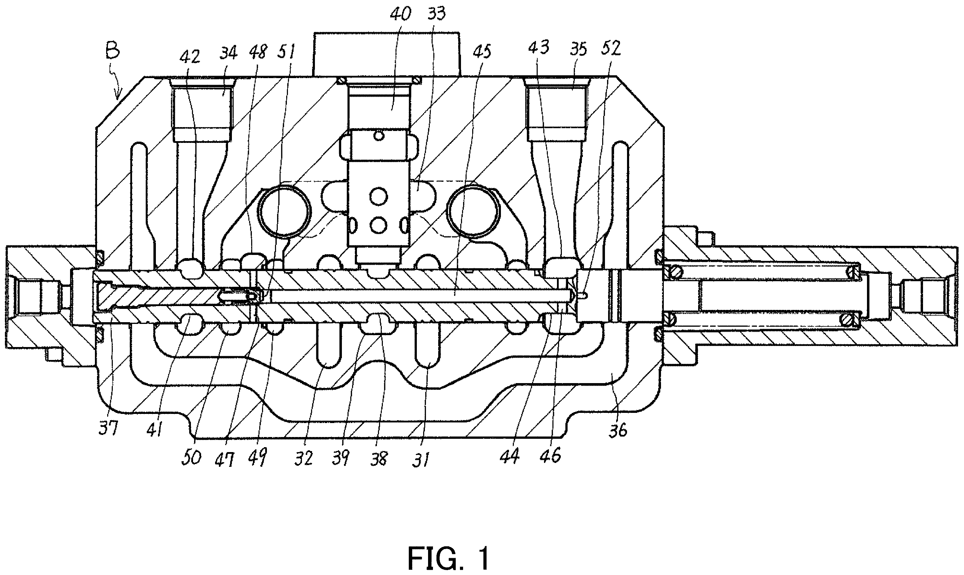

As shown in Fig. 1, a spool valve device according to an embodiment of the present invention includes a valve body B, pump passages 31, 32, a supply passage 33, a pair of actuator ports 34, 35, and a tank passage 36. A spool 37 is slidably assembled into the valve body B.

The pump passages 31, 32 always communicate with one pump (not shown). When the spool 37 is placed at a neutral position shown in the figure, communication between the pump passages 31, 32 and the supply passage 33 is blocked. A pump port 39 is formed in the valve body B. When the spool 37 is switched in the right direction in the figure, the pump passage 31 on one side and the pump port 39 of the valve body B communicate with each other through a first annular recessed portion 38 formed in the spool 37. When the spool 37 is switched in the left direction which is the opposite direction, the pump passage 32 on the other side communicates with the pump port 39 through the first annular recessed portion 38.

The pump port 39 always communicates with a pressure compensation valve 40. When the spool 37 is switched in the right direction in the figure, a pressure fluid guided to the pump passage 31 passes through the first annular recessed portion 38 and the pump port 39, flows into the pressure compensation valve 40, passes through the pressure compensation valve 40, and flows to the supply passage 33.

When the spool 37 is switched in the right direction in the figure, the supply passage 33 and the actuator port 34 communicate with each other through a second annular recessed portion 41 formed in the spool 37 and a first annular groove 42 formed in the valve body B. Therefore, the pressure fluid flowing into the pump passage 31 is supplied from the supply passage 33 to an actuator (not shown) via the actuator port 34.

A return fluid discharged from the actuator to the actuator port 35 flows out to the tank passage 36 via a second annular groove 43 formed in the valve body B and a third annular recessed portion 44 formed in the spool 37.

On the other hand, when the spool 37 is switched in the left direction in the figure, the pump passage 32 on the other side and the pump port 39 communicate with each other through the first annular recessed portion 38. Therefore, the pressure fluid guided to the pump passage 32 passes through the first annular recessed portion 38 and the pump port 39, flows into the pressure compensation valve 40, passes through the pressure compensation valve 40, and flows to the supply passage 33.

When the spool 37 is switched in the left direction in the figure, the supply passage 33 and the actuator port 35 communicate with each other through the third annular recessed portion 44 formed in the spool 37 and the second annular groove 43 formed in the valve body B. Therefore, the pressure fluid flowing into the pump passage 32 is supplied from the supply passage 33 to the actuator (not shown) via the actuator port 35.

A return fluid discharged from the actuator to the actuator port 34 flows out to the tank passage 36 via the first annular groove 42 formed in the valve body B and the second annular recessed portion 41 formed in the spool 37.

A regeneration flow passage 45 is formed in the spool 37 in the axial direction of the spool. An inflow port 46 is formed in one end of the regeneration flow passage 45, and an outflow port 47 is formed in the other end of the regeneration flow passage 45. The inflow port 46 of the regeneration flow passage 45 opens in the third annular recessed portion 44, and always communicates with the actuator port 35. Since the inflow port 46 always communicates with the actuator port 35, a position of the inflow port 46 is not required to be fixed strictly.

Meanwhile, the outflow port 47 of the regeneration flow passage 45 is closed by a land portion 48 when the spool 37 is placed at the neutral position shown in the figure. The land portion 48 is formed between third and fourth annular grooves 49, 50 of the supply passage 33. The third and fourth annular grooves 49, 50 are formed in an opening portion of the supply passage 33 on the side of the actuator port 34. By switching the spool 37 to the right or left, the outflow port 47 selectively opens in the third annular groove (regeneration communication portion) 49 and the fourth annular groove (link portion) 50.

That is, the outflow port 47 communicates with the actuator port 34 or the communication with the actuator port is blocked in accordance with a moving position of the spool 37. For example, when the spool 37 is moved from the neutral position by a predetermined amount and placed at a regeneration switching position, the outflow port 47 opens in the third annular groove 49. When the spool 37 is placed not at the regeneration switching position but in the vicinity of the neutral position (at a blocking position), the communication between the outflow port 47 and the actuator port 34 is blocked.

It should be noted that the land portion 48 is only required to be between the pump passage 32 and the second annular recessed portion 41 and a position thereof can be freely fixed. In other words, since positions of the third and fourth annular grooves 49, 50 are the least regulated by a relative relationship with the other annular recessed portions and annular grooves, a degree of freedom to fix the position of the land portion 48 is increased.

A check valve 51 allowing only a flow from the inflow port 46 to the outflow port 47 is provided in the regeneration flow passage 45. Therefore, even when the outflow port 47 opens in the fourth annular groove 50, the pressure fluid guided to the supply passage 33 does not flow back to the regeneration flow passage 45. It should be noted that the reference sign 52 in the figure denotes a notch for providing communication between the third annular recessed portion 44 and the tank passage 36.

When the spool 37 is switched in the right direction in the figure and placed at the regeneration switching position described above where the outflow port 47 opens in the third annular groove 49, the second annular groove 43 communicates with the tank passage 36 through the third annular recessed portion 44 and the notch 52. The spool valve device returns the return fluid discharged from the actuator to the actuator port 35 to the tank passage 36. At this time, pressure corresponding to an amount of pressure losses is generated on the upstream side of the notch 52. Thus, the return fluid holding the pressure flows into the regeneration flow passage 45 via the inflow port 46.

The return fluid flowing into the regeneration flow passage 45 pushes and opens the check valve 51, reaches the outflow port 47, and joins the fluid supplied to the supply passage 33 via the third annular groove 49. At this time, the supply passage 33 communicates with the actuator port 34 via the fourth annular groove 50 and the second annular recessed portion 41. Thus, the joined pressure fluid is supplied to the actuator port 34.

It should be noted that when the spool 37 is switched in the left direction in the figure which is the opposite direction to the above description, the outflow port 47 opens in the fourth annular groove 50. At this time, since the check valve 51 functions, the pressure fluid of the supply passage 33 does not flow back to the regeneration flow passage 45.

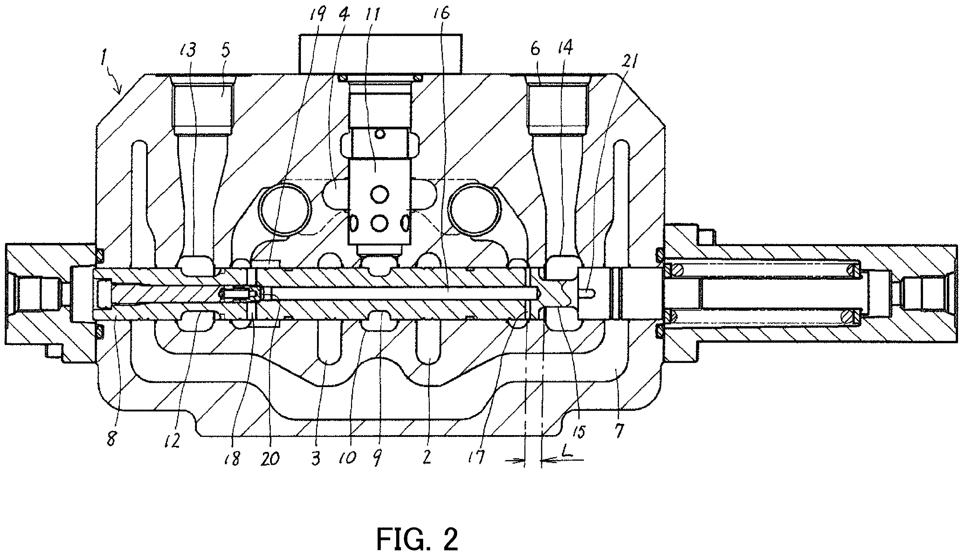

A spool valve device according to a comparative example will be described. Fig. 2 is a sectional view showing the spool valve device according to the comparative example.

As shown in Fig. 2, the spool valve device according to the comparative example has a valve body 1, and pump passages 2, 3, a supply passage 4, a pair of actuator ports 5, 6, and a tank passage 7 are provided in the valve body 1. A spool 8 is slidably assembled into the valve body 1.

The pump passages 2, 3 always communicate with one pump (not shown). When the spool 8 is placed at a neutral position shown in the figure, communication between the pump passages 2, 3 and the supply passage 4 is blocked. When the spool 8 is switched in the right direction in the figure, the pump passage 2 on one side and a pump port 10 of the valve body 1 communicate with each other through a first annular recessed portion 9 formed in the spool 8. When the spool 8 is switched in the left direction which is the opposite direction, the pump passage 3 on the other side communicates with the pump port 10 through the first annular recessed portion 9.

The pump port 10 always communicates with a pressure compensation valve 11. When the spool 8 is switched in the right direction in the figure, a pressure fluid guided to the pump passage 2 passes through the first annular recessed portion 9 and the pump port 10, flows into the pressure compensation valve 11, passes through the pressure compensation valve 11, and flows to the supply passage 4.

When the spool 8 is switched in the right direction in the figure, the supply passage 4 and the actuator port 5 communicate with each other through a second annular recessed portion 12 of the spool 8 and a first annular groove 13 of the valve body 1. Therefore, the pressure fluid flowing into the pump passage 2 is supplied from the supply passage 4 to an actuator (not shown) via the actuator port 5.

At this time, a return fluid discharged from the actuator to the actuator port 6 flows out to the tank passage 7 via a second annular groove 14 of the valve body 1 and a third annular recessed portion 15 of the spool 8.

On the other hand, when the spool 8 is switched in the left direction in the figure, the pump passage 3 on the other side and the pump port 10 communicate with each other through the first annular recessed portion 9. Therefore, the pressure fluid guided to the pump passage 3 passes through the first annular recessed portion 9 and the pump port 10, flows into the pressure compensation valve 11, passes through the pressure compensation valve 11, and flows to the supply passage 4.

When the spool 8 is switched in the left direction in the figure, the supply passage 4 and the actuator port 6 communicate with each other through the third annular recessed portion 15 of the spool 8 and the second annular groove 14 of the valve body 1. Therefore, the pressure fluid flowing into the pump passage 3 is supplied from the supply passage 4 to the actuator (not shown) via the actuator port 6.

At this time, a return fluid discharged from the actuator to the actuator port 5 flows out to the tank passage 7 via the first annular groove 13 of the valve body 1 and the second annular recessed portion 12 of the spool 8.

A regeneration flow passage 16 is formed in the spool 8 in the axial direction of the spool. An inflow port 17 is formed in one end of the regeneration flow passage 16, and an outflow port 18 is formed in the other end of the regeneration flow passage 16. When the spool 8 is placed at the neutral position shown in the figure, the inflow port 17 is maintained at a position substantially adjacent to the supply passage 4 on the inner side of the second annular groove 14.

Further, the outflow port 18 always communicates with the supply passage 4 through a third annular groove 19 formed in the valve body 1. A check valve 20 allowing only a flow from the inflow port 17 to the outflow port 18 is provided in the regeneration flow passage 16.

When the spool 8 is switched in the right direction in the figure, the inflow port 17 of the regeneration flow passage 16 opens in the second annular groove 14 in accordance with a switching amount thereof. The return fluid discharged from the actuator to the actuator port 6 not only flows from the third annular recessed portion 15 to the tank passage 7 but also flows from the inflow port 17 to the regeneration flow passage 16.

It should be noted that the reference sign 21 in the figure denotes a notch opening in the third annular recessed portion 15 of the spool 8. The third annular recessed portion 15 and the tank passage 7 communicate with each other through the notch 21. A flow rate of the fluid flowing to the tank passage 7 and a flow rate of the fluid flowing to the regeneration flow passage 16 are determined by pressure corresponding to an amount of pressure losses when the return fluid passes through the notch 21. The return fluid flowing into the regeneration flow passage 16 pushes and opens the check valve 20, joins the supply passage 4 via the third annular groove 19, and is regenerated on the side of the actuator port 5.

With the spool valve device according to the comparative example, there is a problem that regeneration timing upon switching the spool 8 in the right direction in the figure is not easily advanced. The reason thereof is as follows.

In order to advance the regeneration timing in a state shown in the figure, the inflow port 17 has to open in the second annular groove 14 as quickly as possible when the spool 8 is switched in the right direction in the figure. For this, a distance L from the inflow port 17 to the second annular groove 14 when the spool 8 is placed at the neutral position has to be shortened.

However, when the distance L is too short, the inflow port 17 and the third annular recessed portion 15 overlap with each other. Thus, shortening of the distance L is limited. Therefore, it is considered that the third annular recessed portion 15 is shifted from the current state in the right direction in the figure.

However, a position of the third annular recessed portion 15 is determined in relation to positions of the first and second annular recessed portions 9, 12, the first to third annular grooves 13, 14, 19, and the like. Thus, the position of the third annular recessed portion 15 only cannot be displaced.

At the end, with the spool valve device according to the comparative example, there is a problem that advancement of the regeneration timing is limited.

As shown in Fig. 1, in the present embodiment, the inflow port 46 always communicates with the actuator port 35 on one side. Thus, the inflow port 46 can open in the third annular recessed portion 44 always communicating with the actuator port 35. Therefore, the inflow port 46 may be provided at any position in the third annular recessed portion 44, and accordingly, a degree of freedom in design relating to the opening position of the inflow port 46 is increased to a great extent.

Further, the outflow port 47 communicates with the actuator port 34 or the communication with the actuator port is blocked in accordance with the moving position of the spool 37. When the spool 37 is placed at the regeneration switching position where a predetermined moving amount from the neutral position is ensured, the outflow port 47 is formed to communicate with the actuator port 34 through the supply passage 33. In such a way, the regeneration switching position depends on the moving amount of the spool 37. Thus, the regeneration timing can be changed in accordance with setting of the moving amount.

In particular, in the present embodiment, the land portion 48 is provided between the fourth annular groove (link portion) 50 communicating with the actuator port 34 and the third annular groove (regeneration communication portion) 49 providing communication between the outflow port 47 and the supply passage 33 at the time of regeneration. Thus, the regeneration timing can be freely set in accordance with length of the land portion 48 in the axial direction of the spool 37. Moreover, as described above, the positions of the third and fourth annular grooves 49, 50 are the least regulated by the relative relationship with the other annular recessed portions and annular grooves. Thus, the length of the land portion 48 is hardly regulated.

The present embodiment is optimal for use in a regeneration control system of various cylinders used in a power shovel, for example.

Hereinafter, the configurations, the operations, and the effects of the embodiment of the present invention will be summed up and described.

The present embodiment relates to a spool valve device in which by switching a spool provided in a valve body, a pressure fluid of a pump is guided to an actuator port on one side or guided to an actuator port on the other side, so that the motion direction of an actuator is switched. When the spool is switched in one direction, the spool valve device guides a return fluid discharged from the actuator to the actuator port on one side to the actuator port on the other side via a regeneration flow passage formed along the axial direction of the spool. In such a way, the spool valve device regenerates the return fluid discharged from the actuator.

With the spool valve device of the present embodiment, an inflow port opening in one end of the regeneration flow passage always communicates with the actuator port on one side. An outflow port formed in the other end of the regeneration flow passage communicates with the actuator port on the other side or the communication between the outflow port and the actuator port on the other side is blocked in accordance with a moving position of the spool. When the spool is placed at a regeneration switching position where a predetermined moving amount from a neutral position is ensured, the outflow port communicates with the actuator port on the other side through a supply passage. When the spool is placed at a position other than the regeneration switching position (blocking position), the communication between the outflow port and the actuator port on the other side is blocked.

In this configuration, the inflow port of the regeneration flow passage formed in the spool always communicates with the actuator port on one side. Thus, a position of the inflow port can also be formed in, for example, an annular recessed portion formed in the spool. Meanwhile, the outflow port formed in the other end of the regeneration flow passage communicates with the actuator port on the other side or the communication with the actuator port on the other side is blocked in accordance with the moving position of the spool. When the spool is placed at the regeneration switching position where the predetermined moving amount from the neutral position is ensured, the outflow port communicates with the actuator port on the other side through the supply passage. In such a way, the regeneration switching position depends on the moving amount of the spool. Thus, the regeneration timing can be changed in accordance with setting of the moving amount.

With the spool valve device according to this configuration, a degree of freedom in design of the regeneration timing is improved.

In addition, in the present embodiment, a regeneration communication portion and a link portion are provided in the supply passage, and the supply passage has a land portion formed between the regeneration communication portion and the link portion. When the spool is placed at the position other than the regeneration switching position (blocking position), the outflow port is blocked by the land portion. Therefore, the outflow port of the regeneration flow passage can be closed or opened by the land portion provided in the valve body, and the regeneration switching position can be set in accordance with length of the land portion in the axial direction of the spool.

With the spool valve device according to this configuration, only by changing the length of the land portion in the axial direction of the spool, the regeneration timing can be freely set.

In addition, in the present embodiment, the spool valve device includes a pump port providing communication between the pump and the supply passage. The land portion is formed between the pump port and the actuator port on the other side. Specifically, the land portion is formed between the pump port and the actuator port on the other side in the axial direction of the spool. Therefore, the land portion is only required to be between the pump port and the actuator port on the other side.

With the spool valve device according to this configuration, a degree of freedom in design of a position where the land portion is provided is improved.

In addition, in the present embodiment, a check valve allowing only a flow from the inflow port of the regeneration flow passage to the outflow port is provided in the spool. Therefore, the pressure fluid guided to the supply passage does not flow back to the regeneration flow passage.

With the spool valve device according to this configuration, the pressure fluid from the pump does not uselessly flow out to the tank side.

The embodiments of the present invention described above are merely illustration of some application examples of the present invention and not of the nature to limit the technical scope of the present invention to the specific constructions of the above embodiments.

The present application claims a priority based on Japanese Patent Application No. 2015-189326 filed with the Japan Patent Office on September 28, 2015, all the contents of which are hereby incorporated by reference.

## Claims

1. A spool valve device comprising:
a valve body;
an actuator port on one side and an actuator port on the other side formed in the valve body;
a spool slidably inserted into the valve body;
a supply passage configured to provide communication between a pump and the actuator port on one side or the actuator port on the other side in accordance with a switching position of the spool; and
a regeneration flow passage formed in the spool in the axial direction of the spool, wherein
an inflow port formed in one end of the regeneration flow passage always communicates with the actuator port on one side,
an outflow port formed in the other end of the regeneration flow passage communicates with the actuator port on the other side or the communication between the outflow port and the actuator port on the other side is blocked in accordance with a moving position of the spool,
when the spool is placed at a regeneration switching position where a predetermined moving amount from a neutral position is ensured, the outflow port communicates with the actuator port on the other side through the supply passage, and
when the spool is placed at a position other than the regeneration switching position, the communication between the outflow port and the actuator port on the other side is blocked.

2. The spool valve device according to claim 1, wherein
the supply passage has
a regeneration communication portion communicating with the outflow port when the spool is placed at the regeneration switching position;
a link portion communicating with the actuator port on the other side when the spool is placed at the regeneration switching position; and
a land portion formed between the regeneration communication portion and the link portion, and
the outflow port is blocked by the land portion when the spool is placed at the position other than the regeneration switching position.

3. The spool valve device according to claim 2, further comprising
a pump port configured to provide communication between the pump and the supply passage, wherein
the land portion is formed between the pump port and the actuator port on the other side on the axis line of the spool.

4. The spool valve device according to claim 1, wherein
a check valve allowing only a flow from the inflow port to the outflow port is provided in the regeneration flow passage.
